# EUROPEAN PATENT APPLICATION

(11) **EP 2 065 454 A1**
(43) Date of publication of application: **03.06.2009**
(21) Application number: 07828884.2
(22) Date of filing: 21.09.2007
(51) Int. Cl.: C09J 7/02, B32B 27/00, C09J 201/00

(54) **ADHESIVE SHEET FOR MARKING**

(30) Priority: 22.09.2006 JP 2006257181
(71) Applicant: Lintec Corporation, Tokyo 173-0001 (JP)
(72) Inventor: TOMINO, Tadahiro, Tokyo 173-0001 (JP)
(74) Representative: Gille Hrabal Struck Neidlein Prop Roos
(86) International application number: PCT/JP2007/069143
(87) International publication number: WO 2008/035825

(57) **Abstract**

A pressure sensitive adhesive sheet for marking which comprises a substrate of a non-vinyl chloride-based resin, a pressure sensitive adhesive layer disposed on one face of the substrate and a crosslinked acrylic urethane-based coating layer which comprises (A) an acrylic polyol resin modified with a polyester and having a weight-average molecular weight of 15,000 to 80,000 and (B) a polyisocyanate-based compound as the curing agent and is disposed on the other face of the substrate. The pressure sensitive adhesive sheet is a sheet using a non-vinyl chloride-based substrate which meets environmental requirements, exhibits excellent resistance to scratches, resistance to dipping into chemicals, resistance to cracks under stretching and weatherability and a desired gloss and can be advantageously used, for example, for automobiles.

## Description

### TECHNICAL FIELD

The present invention relates to a pressure sensitive adhesive sheet for marking and, more particularly, to a pressure sensitive adhesive sheet which is a sheet using a non-vinyl chloride-based substrate which meets environmental requirements, exhibits excellent resistance to scratches, resistance to dipping into chemicals, resistance to cracks under stretching and weatherability and a desired gloss and can be advantageously used, for example, for automobiles.

### BACKGROUND ART

Recently, pressure sensitive adhesive sheets (including pressure sensitive adhesive tapes, similarly hereinafter) are used widely in various fields. Pressure sensitive adhesive sheets are used, for example, for packaging, binding, office and household uses, bonding, masking in painting, protecting surfaces, sealing, preventing corrosion with and invasion of water, electric insulation, applications on electronic instruments, medical and sanitary supplies, displays, signs, decorative applications and labels.

In the field of the pressure sensitive sheet for marking such as pressure sensitive adhesive sheets for displays and signs and pressure sensitive adhesive sheets for decorative applications among the above applications, the demand for pressure sensitive adhesive sheets as the material for replacing paintings is increasing so that the productivity of painted products is increased and the cost of production of painted products is decreased. For example, pressure sensitive adhesive sheets are applied to displays and signs such as warning tapes, line tapes and marking tapes, and to decorative applications such as signboards, interior and exterior members of show windows and buildings, decoration of automobiles and motorcycles with marking sheets and stickers and decoration of sash portions of doors of automobiles.

Pressure sensitive adhesive sheets are attached to various articles in place of paintings. Examples of the article for the attachment include metal plates, coated metal plates, glasses, ceramics, stone materials, wooden materials, plastics and papers.

Articles attached with pressure sensitive adhesive sheets in place of paintings are frequently used outdoors, and excellent weatherability is required for both of the substrates and the pressure sensitive adhesives. As the pressure sensitive adhesive, in general, acrylic pressure sensitive adhesives exhibiting excellent weatherability are used. As the substrate, substrates which exhibit excellent weatherability and a small shrinkage and are not too rigid from the standpoint of workability in attachment are preferable. Therefore, film substrates comprising, for example, vinyl chloride-based resins, polyesters, polyolefins, polyacrylates, polycarbonates, polytetrafluoroethylene and thermoplastic polyurethanes are used. Film substrates comprising vinyl chloride-based resins have been widely used from the standpoint of the economy.

However, in the field of the pressure sensitive adhesive sheets for marking, it is found that the vinyl chloride-based substrates are increasingly replaced with non-vinyl chloride-based substrates which meets environmental requirements. Excellent weatherability is required for pressure sensitive adhesive sheets for articles used outdoors. However, for example, polyester-based films and polyolefin-based films exhibit poor weatherability, and cracks or whitening and, in the case of colored substrates, fading tend to occur in the substrates based on these films.

For pressure sensitive adhesive sheets for marking used for automobiles, gloss, resistance to scratches and resistance to dipping into chemicals (resistance to dipping into gasoline) are required in addition to the weatherability. However, it is difficult for polyester-based substrates that all of these requirements are satisfied.

In the field of golf balls, a painting composition for golf balls exhibiting excellent weatherability in combination with excellent impact resistance and wear resistance is disclosed (for example, refer to Patent Reference 1). However, the painting composition is used for golf balls and cannot be used for pressure sensitive adhesive sheet for marking.
[Patent Reference 1] Japanese Patent Application Laid-Open No. 2003-253201

### DISCLOSURE OF THE INVENTION

Under the above circumstances, the present invention has an object of providing a pressure sensitive adhesive sheet for marking which is a sheet using a non-vinyl chloride-based substrate which meets environmental requirements, exhibits excellent resistance to scratches, resistance to dipping into chemicals, resistance to cracks under stretching and weatherability and a desired gloss and can be advantageously used, for example, for automobiles.

As the result of intensive studies by the present inventors, it was found that the above object could be achieved with a pressure sensitive adhesive sheet comprising a crosslinked acrylic urethane-based coating layer which was disposed on the front face of a substrate of a non-vinyl chloride-based resin and comprised a specific acrylic polyol resin modified with a polyester, a polyisocyanate-based compound, which was preferably a specific modified product of a polyisocyanate-based compound, as the curing agent and, where necessary, inorganic particles and/or organic particles having a specific average diameter. The present invention has been completed based on the knowledge.

The present invention provides:
[1] A pressure sensitive adhesive sheet for marking which comprises a substrate of a non-vinyl chloride-based resin, a pressure sensitive adhesive layer disposed on one face of the substrate and a crosslinked acrylic urethane-based coating layer which comprises (A) an acrylic polyol resin modified with a polyester and having a weight-average molecular weight of 15,000 to 80,000 and (B) a polyisocyanate-based compound as a curing agent and is disposed on other face of the substrate;
[2] A pressure sensitive adhesive sheet for marking described in [1], wherein a glass transition temperature of the acrylic polyol resin modified with a polyester of component (A) is 42 to 60°C;
[3] A pressure sensitive adhesive sheet for marking described in any one of [1] and [2], wherein the crosslinked acrylic urethane-based coating layer comprises inorganic particles and/or organic particles having an average diameter of 1 to 5 µm;
[4] A pressure sensitive adhesive sheet for marking described in any one of [1] to [3], wherein the polyisocyanate-based compound of component (B) is at least one compound selected from the group consisting of an aliphatic isocyanate, an alicyclic isocyanate, an aromatic isocyanate, an aromatic aliphatic isocyanate, a modified compound of the isocyanates which is at least one compound selected from the group consisting of an adduct, a biuret, an isocyanurate, a urethoneimine, a urethodione, a carbodiimide and an elastic modified polyisocyanate derived from the isocyanates and;
[5] A pressure sensitive adhesive sheet for marking described in any one of [1] to [4], wherein a ratio of amounts by mole of isocyanate group in component (B) and hydroxyl group in component (A), [NCO]/[OH], is in a range of 0.5 to 1.5; and
[6] A pressure sensitive adhesive sheet for marking described in any one of [1] to [5], wherein a thickness of the crosslinked acrylic urethane-based coating layer is 1 to 8 µm.

### THE MOST PREFERRED EMBODIMENT TO CARRY OUT THE INVENTION

The pressure sensitive adhesive sheet for marking is characterized in that the sheet comprises a substrate of a non-vinyl chloride-based resin, a pressure sensitive adhesive layer disposed on one face of the substrate and a crosslinked acrylic urethane-based coating layer which comprises (A) an acrylic polyol resin modified with a polyester and having a weight-average molecular weight of 15,000 to 80,000 and (B) a polyisocyanate-based compound as the curing agent and is disposed on the other face of the substrate.

As the substrate of a non-vinyl chloride-based resin (the substrate of a resin other than vinyl chloride-based resins; hereinafter, referred to as the substrate, occasionally) used for the pressure sensitive adhesive sheet for marking of the present invention, a substrate which exhibits a small shrinkage and is not too rigid from the standpoint of the workability in attachment is preferable since the pressure sensitive adhesive sheet is used in place of painting. Therefore, substrates which are obtained by using polyester-based resins such as polyethylene terephthalate and amorphous polyethylene terephthalate, polyolefin-based resins such as polyethylene, polypropylene and propylene-ethylene copolymers, acrylic resins, polycarbonate-based resins, fluororesins, thermoplastic urethane-based resins, polyester-based thermoplastic elastomers, polyolefin-based thermoplastic elastomers and mixtures of these resins can be used.

Where desired, the substrate of a non-vinyl chloride-based resin may be subjected to a surface treatment in accordance with a process such as the oxidation process and the roughening process on one or both faces so that adhesion with the pressure sensitive adhesive layer or the acrylic urethane-based coating layer formed on the faces is improved. Examples of the oxidation process include the treatment by corona discharge, the plasma treatment, the treatment with chromic acid (the wet process), the treatment with flame, the treatment with the heated air and the treatment with ozone under irradiation with ultraviolet light. Examples of the roughening process include the sand blasting process and the treatment with a solvent. The process for the surface treatment is suitably selected in accordance with the type of the substrate. In general, the treatment by corona discharge is preferable from the standpoint of the effect and the operability. The substrate treated with a primer on one face or both faces may be used.

The thickness of the substrate is selected, in general, in the range of 10 to 300 µm, and preferably in the range of 30 to 200 µm although the thickness may be different depending on the application.

In the pressure sensitive adhesive sheet for marking of the present invention, the pressure sensitive adhesive used for forming the pressure sensitive adhesive layer on one face of the substrate of a non-vinyl chloride-based resin is not particularly limited, and a desired pressure sensitive adhesive can be selected suitably from pressure sensitive adhesives conventionally used for pressure sensitive adhesive layers in pressure sensitive adhesive sheets for marking. For example, acrylic pressure sensitive adhesives, rubber-based pressure sensitive adhesives, silicone-based pressure sensitive adhesives, polyurethane-based pressure sensitive adhesives and polyester-based pressure sensitive adhesives can be used. The type of the pressure sensitive adhesive may be any of the emulsion type, the solvent type and the non-solvent type. The thickness of the pressure sensitive adhesive layer is, in general, about 1 to 300 µm and preferably about 5 to 100 µm.

Among the various pressure sensitive adhesives described above, acrylic pressure sensitive adhesives are preferable from the standpoint of the weatherability.

It is preferable that the pressure sensitive adhesive layer formed with the acrylic pressure sensitive adhesive is a layer comprising an acrylic pressure sensitive adhesive which comprises an acrylic resin having a weight-average molecular weight of about 500,000 to 2,000,000 and preferably 700,000 to 1,700,000 and has been treated by crosslinking. When the weight-average molecular weight is within the above range, a pressure sensitive adhesive sheet for marking exhibiting excellent balance between the adhesion and the holding power can be obtained.

The weight-average molecular weight described above is obtained by the measurement in accordance with the gel permeation chromatography (GPC) and expressed as the value of the corresponding polystyrene.

As the acrylic resin comprised in the acrylic pressure sensitive adhesive, (meth)acrylic acid ester-based copolymers are used. As the (meth)acrylic acid ester-based copolymer, copolymers of a (meth)acrylic acid ester in which the alkyl group in the ester portion has 1 to 20 carbon atoms, a monomer having a functional group having active hydrogen and other monomers used where desired are preferable.

Examples of the (meth)acrylic acid ester in which the alkyl group in the ester portion has 1 to 20 carbon atoms include methyl (meth)acrylate, ethyl (meth)acrylate, propyl (meth)acrylate, butyl (meth)acrylate, pentyl (meth)acrylate, hexyl (meth)acrylate, cyclohexyl (meth)acrylate, 2-ethylhexyl (meth)acrylate, isooctyl (meth)acrylate, decyl (meth)acrylate, dodecyl (meth)acrylate, myristyl (meth)acrylate, palmityl (meth)acrylate and stearyl (meth)acrylate. The above compounds may be used singly or in combination of two or more.

Examples of the monomer having a functional group having active hydrogen include hydroxyalkyl esters of (meth)acrylic acid such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate and 4-hydroxybutyl (meth)acrylate; acrylamides such as acrylamide, methacrylamide, N-methylacrylamide, N-methylmethacrylamide, N-methylolacrylamide and N-methylol-methacrylamide; monoalkylaminoalkyl (meth)acrylates such as monomethylaminoethyl (meth)acrylate, monoethylaminoethyl (meth)acrylate, monomethylaminopropyl (meth)acrylate and monoethyl-aminopropyl (meth)acrylate; and ethylenically unsaturated carboxylic acids such as acrylic acid, methacrylic acid, crotonic acid, maleic acid, itaconic acid and citraconic acid. The above monomers may be used singly or in combination of two or more.

Examples of the other monomer used where desired include vinyl esters such as vinyl acetate and vinyl propionate; olefins such as ethylene, propylene and isobutylene; halogenated olefins such as vinyl chloride and vinylidene chloride; styrene-based monomers such as styrene and α-methylstyrene; diene-based monomers such as butadiene, isoprene and chloroprene; nitrile-based monomers such as acrylonitrile and methacrylonitrile; and N,N-dialkyl substituted acrylamides such as N,N-dimethylacrylamide and N,N-dimethylmethacrylamide. The above monomers may be used singly or in combination of two or more.

In the acrylic pressure sensitive adhesive, the copolymer form of the (meth)acrylic acid ester-based copolymer used as the resin component is not particularly limited and may be any of random, block and graft copolymers.

In the present invention, the (meth)acrylic acid ester-based copolymer may be used singly or in combination of two or more.

As the acrylic pressure sensitive adhesive, an acrylic pressure sensitive adhesive treated by crosslinking is preferable. The crosslinking agent used for the crosslinking treatment is not particularly limited, and a desired crosslinking agent can be suitably selected from crosslinking agents conventionally used as the crosslinking agent for acrylic pressure sensitive adhesives. Examples of the crosslinking agent include polyisocyanate compounds, epoxy compounds, melamine resins, urea resins, dialdehydes, methylol polymers, metal chelate compounds, metal alkoxides and metal salts. Among the above agents, polyisocyanate compounds and epoxy compounds are preferable.

In the present invention, the crosslinking agent may be used singly or in combination of two or more. The amount is, in general, in the range of 0.01 to 20 parts by mass and preferably in the range of 0.1 to 10 parts by mass per 100 parts by mass of the (meth)acrylic acid ester-based copolymer although the amount may be different depending on the type of the crosslinking agent.

To the acrylic pressure sensitive adhesive, tackifiers, antioxidants, ultraviolet light absorbents, light stabilizers, softeners, silane coupling agents and fillers may be added, where desired.

In the pressure sensitive adhesive sheet for marking of the present invention, the acrylic urethane-based coating layer disposed on the face of the substrate of a non-vinyl chloride-based resin opposite to the face having the pressure sensitive adhesive layer described above is a layer which comprises (A) an acrylic polyol resin modified with a polyester and (B) a polyisocyanate-based compound as the curing agent and has been treated by crosslinking.

The acrylic polyol resin modified with a polyester of component (A) is constituted with a main chain comprising an acrylic polymer and side chains comprising a polyester.

In the acrylic polyol resin modified with a polyester, it is preferable that the content of the polyester portion in the side chains is 2 to 50% by mass and more preferably 10 to 30 parts by mass from the standpoint of the resistance to scratches, the resistance to cracks under stretching, the resistance to contamination and the weatherability of the coating layer.

It is necessary that the weight-average molecular weight Mw of the acrylic polyol resin modified with a polyester be in the range of 15,000 to 80,000. When the weight-average molecular weight is within the above range, the resistance to scratches, the resistance to dipping into chemicals and the resistance to blocking are excellent. It is preferable that the weight-average molecular weight is in the range of 16,000 to 75,000 and more preferably in the range of 17,000 to 70,000. It is preferable that the glass transition temperature is in the range of 42 to 60°C. When the glass transition temperature is within the above range, the resistance to scratches is excellent. It is more preferable that the glass transition temperature is 42 to 55°C.

The weight-average molecular weight described above is measured in accordance with the GPC method and expressed as the value of the corresponding polystyrene. The glass transition temperature is the value measured by using a differential scanning calorimeter (DSC) manufactured by SEIKO INSTRUMENTS Co., Ltd.

It is preferable that the hydroxyl value is in the range of 30 to 180 mg KOH/g. When the hydroxyl value is 30 mg KOH/g or greater, sufficient crosslinking can be achieved, and the resistance to scratches and the resistance to cracks under stretching of the coating layer are excellent. When the hydroxyl value is 180 mg KOH/g or smaller, the coating fluid has a suitable viscosity, and the coating property and the pot life are excellent. It is more preferable that the hydroxyl value is 50 to 150 mg KOH/g.

The hydroxyl value described above is the value obtained by the measurement in accordance with the method of Japanese Industrial Standard K 0070 7.1.

The structure of the acrylic polymer which is the main chain of the acrylic polyol resin modified with a polyester is not particularly limited. It is preferable that the content of the repeating unit derived from the acrylic monomer described below is 50% by mass or greater based on the amount of the entire monomer units constituting the acrylic polyol resin modified with a polyester. The acrylic monomer unit constituting the main chain may comprise a single type or two or more types of the acrylic monomers. The acrylic monomer unit constituting the main chain may be a unit obtained by copolymerization of the acrylic monomer with other copolymerizable monomers.

It is preferable that the polyester portion as the side chain of the acrylic polyol resin modified with a polyester has a structure represented by general formula (I) and/or (II): 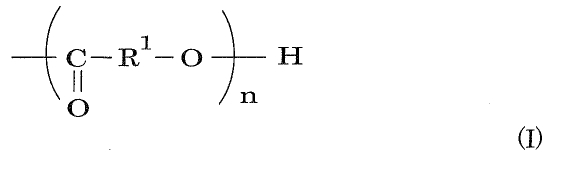 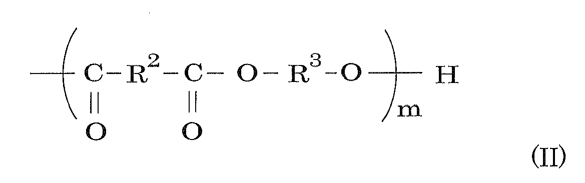 wherein R¹, R² and R³ each represent an alkylene group having 1 to 12 carbon atoms, and n and m reach represent an integer of 1 to 20.

Examples of the acrylic polyol resin modified with a polyester include (1) resins obtained by adding the component constituting the side chain such as a lactone to the main chain of the acrylic polymer, (2) resins obtained by homopolymerization of an acrylic monomer to which a polyester is added (hereinafter, referred to as an acrylic monomer having a polyester) and (3) resins obtained by copolymerization of an acrylic monomer having a polyester with another acrylic monomer.

In the present invention, it is preferable that the polyol resin modified with a polyester is a copolymer constituted with at least two types of acrylic monomers. It is preferable that the acrylic monomer comprises the acrylic monomer having a polyester.

In the present invention, it is preferable that the amount of the acrylic monomer having a polyester is 5 to 50% by mass and more preferably 10 to 30% by mass based on the amount by mass of the entire monomers from the standpoint of the resistance to scratches, the resistance to cracks under stretching and the workability in coating of the coating layer.

In the present invention, it is preferable that a (meth)acrylate which is modified with a lactone and has hydroxyl group at the end of the molecule is used as the acrylic monomer having a polyester. Examples of the (meth)acrylate which is modified with a lactone and has hydroxyl group at the end of the molecule include (meth)acrylates obtained by ring opening addition of about 1 to 10 moles of a lactone compound to an acrylic monomer having hydroxyl group using a catalyst. Examples of the lactone compound include ε-caprolactone, β-propiolactone, γ-butyrolactone and δ-valerolactone. Specifically, monomers of the "PRACCEL FM series (such as PRACCEL FM-3)" (methacrylates modified with caprolactone) and "PRACCEL FA series" (acrylates modified with caprolactone) manufactured by DAICEL CHEMICAL INDUSTRIES, LTD. can be used.

As the acrylic monomer other than the acrylic monomer having a polyester described above, other acrylic monomers can be used. The type of the acrylic monomer is not particularly limited. Examples of the acrylic monomer include (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, 2-ethylhexyl (meth)acrylate, lauryl (meth)acrylate, stearyl (meth)acrylate, cyclohexyl (meth)acrylate, benzyl (meth)acrylate, glycidyl (meth)acrylate, N,N-dimethylaminoethyl (meth)acrylate, N,N-diethylaminoethyl (meth)acrylate, γ-methacryloxypropyltrimethoxysilane, acrylonitrile, acrylamide, N,N-dimethylacrylamide and diacetoneacrylamide.

Acrylic monomers having hydroxyl group such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, acrylamide modified with N-methylol group and methacrylates modified with a carbonate ["HEMAC" manufactured by DAICEL CHEMICAL INDUSTRIES, LTD. can also be used.

The acrylic polyol resin modified with a polyester may comprise unsaturated monomers copolymerizable with the acrylic monomer having a polyester as the monomer components in combination with the acrylic monomer having a polyester described above. Examples of the unsaturated monomer include vinyl ester-based compounds such as vinyl acetate and vinyl propionate; vinyl ethers such as vinyl methyl ether, vinyl cyclohexyl ether, vinyl phenyl ether, vinyl benzyl ether and vinyl glycidyl ether; aromatic compounds having an ethylenically unsaturated double bond such as styrene, vinyltoluene and α-methylstyrene; halogenated vinyl compounds such as vinyl chloride and vinyl bromide; halogenated vinylidene compounds such as vinylidene chloride and vinylidene bromide; diesters of maleic acid such as dialkyl maleates; diesters of fumaric acid such as dialkyl fumarates; diesters of itaconic acid such as dimethyl itaconate; heterocyclic vinyl compounds such as N-vinylpyridine and 2-vinylpyridine; and allyl compounds such as allyl alcohol, glycerol monoallyl ether and glycerol diallyl ether.

Acrylic monomers having a unit absorbing ultraviolet light in the molecule, acrylic monomers having a unit exhibiting the antioxidization property in the molecule and acrylic monomer having a unit exhibiting the antistatic property in the molecule can also be used. The excellent property for absorbing ultraviolet light, antioxidation property and the antistatic property can be provided to the coating layer by using the above acrylic monomers.

In the present invention, copolymers constituted with the acrylic monomer having a polyester, methyl (meth)acrylate and a (meth)acrylate having hydroxyl group are preferable as the acrylic polyol resin modified with a polyester, in particular, from the standpoint of the resistance to cracks on stretching and the weatherability, and copolymers constituted with a methacrylate modified with caprolactone, methyl methacrylate and 2-hydroxyethyl methacrylate are more preferable.

The acrylic polyol resin modified with a polyester can be produced, for example, by polymerizing the monomers described above using a radical polymerization initiator such as an organic peroxide compound, an azo-based compound and a salt of persulfuric acid in accordance with a conventional polymerization process such as the solution polymerization, the suspension polymerization and the emulsion polymerization.

When the acrylic polyol resin modified with a polyester described above is produced in accordance with the solution polymerization, the monomers described above are polymerized in a suitable solvent in the presence of a radical polymerization initiator soluble in oils such as an organic peroxide and an azo-based compound.

As the solvent for the polymerization, a conventional solvent can be used. Examples of the solvent include esters such as methyl acetate and ethyl acetate, aromatic hydrocarbons such as benzene, toluene and xylene, ketones such as acetone, cyclohexanone and methyl ethyl ketone and ethers such as tetrahydrofuran. The solvent may be used singly or as a mixture of two or more. The amount of the polymerization initiator is not particularly limited. The amount is about 0.05 to 2% by mass based on the amount of the entire monomers.

When the acrylic polyol resin modified with a polyester described above is produced in accordance with the emulsion polymerization, the monomer components are emulsified using an emulsifier, where necessary, and copolymerized in the presence of a polymerization initiator soluble in water such as an organic peroxides, an azo-based compound and a salt of persulfuric acid.

It is necessary that the acrylic polyol resin modified with a polyester obtained as described above has a weight-average molecular weight in the range of 15,000 to 80,000. It is preferable that the glass transition temperature is in the range of 42 to 60°C.

In the present invention, the polyisocyanate-based compound used as the curing agent of component (B) is not particularly limited as long as the compound has two or more isocyanate groups. Examples of the polyisocyanate compound include aromatic diisocyanates such as 4,4'-diphenylmethane diisocyanate, 2,4'-diphenylmethane diisocyanate, 2,2'-diphenylmethane diisocyanate, 2,4-tolylene diisocyanate, 2,6-tolylene diisocyanate, 4,4'-diphenyl ether diisocyanate, 2-nitrodiphenyl 4,4'-diisocyanate, 2,2-diphenylpropane 4,4'-diisocyanate, 3,3'-dimethyl-diphenylmethane 4,4'-diisocyanate, 1,2-phenylene diisocyanate, 1,3-phenylene diisocyanate, 1,4-phenylene diisocyanate, 1,4-naphthalene diisocyanate, 1,5-naphthalene diisocyanate and 3,3'-dimethoxydiphenyl 4,4'-diisocyanate; aliphatic diisocyanates such as 1,6-hexamethylene diisocyanate, 1,4-tetramethylene diisocyanate and lysine diisocyanate; aromatic aliphatic diisocyanates such as o-xylylene diisocyanate, m-xylylene diisocyanate, p-xylylene diisocyanate and tetramethylxylylene diisocyanate; and alicyclic diisocyanates such as isophorone diisocyanate, hydrogenated tolylene diisocyanate, hydrogenated xylylene diisocyanate, hydrogenated diphenylmethane diisocyanate and hydrogenated tetramethylxylylene diisocyanate. Further examples include triisocyanates such as triphenylmethane triisocyanate, methylene-bis(4-phenylmethane) triisocyanate, 2,4,6-triisocyanatotoluene and 2,4,4-triisocyanatodiphenyl ether; and tetraisocyanates having four isocyanate groups.

Modified polyisocyanates such as modified compounds of the isocyanates which are adducts, biurets, isocyanurates, urethoneimines, urethodiones and carbodiimides derived from the isocyanates and elastic modified polyisocyanates, can also be used.

The adduct is the reaction product of a low molecular weight compound having active hydrogen such as ethylene glycol, propylene glycol, neopentyl glycol, trimethylolpropane and castor oil with the isocyanate described above.

The elastic modified polyisocyanate is obtained by using the diisocyanate described above such as tolylene diisocyanate, xylylene diisocyanate, diphenylmethane diisocyanate, hexamethylene diisocyanate and isophorone diisocyanate as the monomer, followed by conducting the urethane-forming reaction with an elastic compound having active hydrogen to form a prepolymer having NCO group at the end.

Examples of the elastic compound having active hydrogen used for the elastic modification of the isocyanate include polyester polyols, polycarbonate polyols, polyether polyols, polyolefin polyols, polyols derived from animal oils and plant oils and copolyols derived from these polyols.

In the present invention, as component (B), the polyisocyanate-based compound described above may be used singly or in combination of two or more. Among the above compounds, the adducts and the isocyanurates of the diisocyanates and elastic modified polyisocyanates are preferable from the standpoint of the resistance to cracks under stretching.

As the relative amounts of component (A) and component (B), it is preferable that the ratio of the amounts by mole of isocyanate group in component (B) to hydroxyl group in component (A), [NCO]/[OH], is in the range of 0.5 to 1.5. When the above ratio of the amounts by mole is 0.5 or greater, the amount of unreacted hydroxyl group is decreased, and the properties of the coating film such as water resistance is excellent. When the ratio of the amounts by mole is 1.5 or smaller, the excessive amount of isocyanate group is decreased. Therefore, the tackiness remaining on the formed coating film is decreased, and the formation of a fragile coating film is suppressed. It is more preferable that [NCO]/[OH] is 0.8 to 1.2.

The pressure sensitive adhesive sheet for marking of the present invention may comprise, where necessary, inorganic particles and/or organic particle having an average diameter of about 1 to 5 µm as the agent for matting so that the gloss of the surface can be adjusted.

When the average diameter is within the above range, the surface of the coating film can have a fine texture, and the effect of matting can be effectively exhibited.

Examples of the inorganic particles include particles of silica, alumina, mica, calcium carbonate, barium sulfate, silica sand and Shirasu balloon can be used. Examples of the organic particles include particles of polyethylene, polystyrene, acrylic resins, polycarbonates, benzoguanamine/formaldehyde condensates, benzoguanamine/melamine/formaldehyde condensates, urea-based resins and waxes.

In the present invention, the particles may be used singly or in combination of two or more. The content of the particles for matting described above in the crosslinked acrylic urethane-based coating layer is, in general, about 0.05 to 10% by mass and preferably 0.1 to 5% by mass expressed as the content of solid components although the content is different depending on the desired gloss of the surface.

For forming the crosslinked acrylic urethane-based coating layer described above in the pressure sensitive adhesive sheet for marking of the present invention, a coating fluid for forming the acrylic urethane-based coating layer described above (hereinafter, referred to as a coating fluid, occasionally) is prepared in the first step. The type of the coating fluid may be any of the solvent type and the emulsion type. In the present invention, the solvent type is preferable.

The coating fluid can be prepared by adding the acrylic polyol resin modified with a polyester of component (A), the polyisocyanate-based compound of component (B) as the curing agent and, where necessary, the inorganic particles and/or the organic particles for matting and various types of additives into a suitable solvent, followed by uniformly dissolving or dispersing the added components.

As the solvent, conventional solvents, examples of which include esters such as methyl acetate and ethyl acetate, aromatic hydrocarbons such as benzene, toluene and xylene, ketones such as acetone, cyclohexanone and methyl ethyl ketone, and ethers such as tetrahydrofuran, can be used. The solvent may be used singly or in combination of two or more.

As the various types of additives, for example, ultraviolet light absorbents of the addition type (the low molecular weight type), antioxidants, antistatic agents, leveling agents, fillers, coloring agents, agents for preventing hydrolysis and defoaming agents can be added.

The concentration suitable for the coating process is, in general, 5 to 50% by mass and preferably 10 to 40% by mass expressed as the concentration of solid components.

The crosslinked acrylic urethane-based coating layer can be formed by applying the coating fluid for forming the acrylic urethane-based coating layer obtained as described above to the face of the substrate of a non-vinyl chloride-based resin opposite to the face having the pressure sensitive adhesive layer, for example, in accordance with the bar coating process, the knife coating process, the roll coating process, the blade coating process, the die coating process or the gravure coating process, followed by drying under heating at a temperature of about 30 to 80°C for about 30 seconds to 5 minutes.

The thickness of the crosslinked acrylic urethane-based coating layer is not particularly limited. The thickness is, in general, about 1 to 8 µm and preferably 3 to 6 µm.

In the pressure sensitive adhesive sheet for marking of the present invention, a release sheet may be attached to the pressure sensitive adhesive layer. Examples of the release sheet include sheets obtained by coating paper substrates such as glassine paper, coated paper and wood free paper, laminated papers obtained by laminating a thermoplastic resin such as polyethylene to the paper substrates and plastic films examples of which include films of polyesters such as polyethylene terephthalate, polybutylene phthalate and polyethylene naphthalate and polyolefins such as polypropylene and polyethylene with a releasing agent. As the releasing agent, silicone-based releasing agents, fluorine-based releasing agents and long chain alkyl-based releasing agents can be used. Among these releasing agents, silicone-based releasing agents which are inexpensive and can provide stable properties are preferable. The thickness of the release sheet is not particularly limited. The thickness is, in general, about 20 to 250 µm.

When the release sheet is attached to the pressure sensitive adhesive layer, the process may be as follows: the face of the layer of the releasing agent on the release sheet is coated with the pressure sensitive adhesive to form a layer of the pressure sensitive adhesive layer having a prescribed thickness; the obtained laminate is attached to one face of the substrate of a non-vinyl chloride-based resin so that the layer of the pressure sensitive adhesive is transferred to the substrate of a non-vinyl chloride-based resin; and the release sheet is left remaining attached.

The pressure sensitive adhesive sheet for marking of the present invention is a sheet using a non-vinyl chloride-based substrate which meets environmental requirements, exhibits excellent resistance to scratches, resistance to dipping into chemicals, resistance to cracks under stretching and weatherability and a desired gloss and can be advantageously used for displays and signs such as warning tapes, line tapes and marking tapes, and for decorative applications such as signboards, interior and exterior members of show windows and buildings, decoration of automobiles and motorcycles with marking sheets and stickers and decoration of sash portions of doors of automobiles.

### EXAMPLES

The present invention will be described more specifically with reference to examples in the following. However, the present invention is not limited to the examples.

The properties of the pressure sensitive adhesive for marking were evaluated in accordance with the following methods.

### (1) Resistance to cracks

The resistance to cracks under stretching was examined by visual observation of the appearance (the presence or the absence of cracks and the like) and evaluated in accordance with the following criterion.

In the stretching, a pressure sensitive adhesive sheet having a size of 25 mm×100 mm from which the release sheet had been removed was stretched in the longitudinal direction using "TENSILON RTA-100" manufactured by ORIENTEC Co., LTD.

Criterion for the evaluation:
good: no cracks formed under stretching of 10%
fair: no cracks formed under stretching of 5%
poor: cracks formed under stretching of 5%

### (2) Resistance to scratches in the presence of chemicals

A cotton cloth impregnated with isopropyl alcohol (IPA), a wax containing a compound (WAX) or kerosene was used. The test for the resistance to scratches was conducted by rubbing the surface of a crosslinked acrylic urethane-based coating layer of a pressure sensitive adhesive sheet for marking under a load of 4.9 N in 10 reciprocal movements. The change in the gloss before and after the test was obtained, and the resistance to scratches was evaluated in accordance with the following criterion:
good: change in the gloss before and after the test: smaller than 10%; no scratches after the test
fair: change in the gloss before and after the test: 10% or greater and smaller than 20%; slight scratches after the test
poor: change in the gloss before and after the test: 20% or greater; scratches after the test

### (3) Gloss

The 60 degree specular gloss (the gloss) was measured in accordance with the method of Japanese Industrial Standard K 7105 using a gloss meter manufactured by Nippon Denshoku Industries Co., Ltd.

### (4) Resistance to dipping into chemicals

A pressure sensitive adhesive sheet having a size of 25 mm×50 mm from which the release sheet had been removed was attached to a plate coated with a melamine resin at 23°C under 50% RH and, after being left standing under the same condition for 24 hours, the obtained laminate was dipped into gasoline for 30 minutes. The appearance after the dipping was visually observed, and the resistance to dipping into chemicals was evaluated in accordance with the following criterion:
good: no change in the appearance
fair: slightly cloudy or slight separation of the coating layer
poor: a markedly abnormal appearance

### (5) Weatherability

A pressure sensitive adhesive sheet having a size of 65 mm×25 mm from which the release sheet had been removed was attached to a plate coated with a melamine resin by one reciprocal movement of a roller of 2 kg at 23°C under 50% RH, and the obtained laminate was left standing for 24 hours.

Then, the accelerated weathering test was conducted for 1,000 hours using a sunshine weathermeter [manufactured by SUGA TEST INSTRUMENTS CO., LTD.; the type: "WEL-SUN-HCH"].

The pressure sensitive adhesive sheet was examined by visual observation, and the weatherability was evaluated in accordance with the following criterion:
good: no change in the appearance
poor: whitened or cracks formed

### (6) Resistance to blocking

Five sheets of pressure sensitive adhesive sheet having a size of 210 mm×297 mm were stacked together in a manner such that the crosslinked acrylic urethane-based coating layer was brought into contact with the back face of the release sheet to obtain a stack. A load of 1961 N/m² was applied to the stack, and the stack was left standing in a tank kept at a constant temperature of 30°C for 3 days in this condition. Then, each pressure sensitive adhesive sheet in the stack was manually peeled upwards successively from the uppermost sheet to the lower sheets. It was examined whether separation of the interface of the coating layer from the back face of the release sheet took place smoothly without resistance or with blocking. The resistance to blocking was evaluated in accordance with the following criterion:
good: no blocking found
poor: blocking found

The weight-average molecular weight (Mw) and the glass transition temperature (Tg) of an acrylic polyol resin modified with a polyester were measured in accordance with the following methods.

### <Weight-average molecular weight (Mw)>

### GPC Method

Instrument: "HLC-8120"; manufactured by Tosoh Corporation
Column: TSK-GelSuper HM-MX1
Temperature of the column: 40°C
Solvent for development: THF (tetrahydrofuran)
Flow rate: 0.6 ml/min

### <Glass transition temperature>

### DSC method

Instrument: "DSC 6200"; manufactured by SEIKO INSTRUMENTS Co., Ltd.
Temperature condition: -30°C to 100°C (rate of elevation of temperature: 8°C/min)

### Example 1

As the substrate of a non-vinyl chloride-based resin, a film of a polyester-based thermoplastic elastomer having a thickness of 100 µm [manufactured by KURABO INDUSTRIES LTD.; the trade name: "ES-9470BK"] was used. Separately, a release sheet obtained by treating a polyethylene-laminate paper with a silicone-based releasing agent for releasing and having a thickness of 170 µm [manufactured by Oji Paper Co., Ltd.; the trade name: "SP-12HL KAI"] was coated with an acrylic pressure sensitive adhesive [manufactured by LINTEC Corporation; the trade name: "SK"; containing a crosslinking agent of an epoxy compound] on the face treated with the releasing agent, and the coating layer was dried to form a pressure sensitive adhesive layer having a thickness of 30 µm.

The release sheet having the pressure sensitive adhesive layer described above was attached to one face of the film of a polyester-based thermoplastic elastomer described above in a manner such that the pressure sensitive adhesive layer in the release sheet faced to the above face of the film, and the pressure sensitive adhesive layer was transferred to the film.

Separately, 100 parts by mass of an acrylic polyol resin modified with a polyester [manufactured by Asia Industry Co., Ltd.; the trade name: "EEX-19"; Tg of the resin: 47°C; Mw of the resin: 68,000; the solvent: toluene; the viscosity at 25°C: 8,500 mPa·s; the concentration of solid components: 54.5% by mass] and 17 parts by mass of a curing agent [manufactured by Asia Industry Co., Ltd.; the trade name: "#8000"; an aliphatic diisocyanate modified into a cyanurate; the concentration of solid components: 48.1% by mass; the content of NCO: 10.1% by mass; the solvent: toluene] were added to 100 parts by mass of ethyl acetate, and a coating fluid having a concentration of solid components of 29% by mass was prepared.

The face of the film of a polyester-based thermoplastic elastomer opposite to the face having the pressure sensitive adhesive layer was coated with the coating fluid prepared above by a Mayer bar No. 12 so that the thickness of the formed layer was 4 µm after being dried. The formed coating layer was treated by heating at 70°C for 1 minute to form a crosslinked acrylic urethane-based coating layer, and a pressure sensitive adhesive sheet for marking was prepared.

The results of evaluation of the properties of the pressure sensitive adhesive sheet for marking are shown in Table 1.

### Example 2

A coating fluid having a concentration of solid components of 29% by mass was prepared in accordance with the same procedures as those conducted in Example 1 except that 100 parts by mass of an acrylic polyol resin modified with a polyester [manufactured by Asia Industry Co., Ltd.; the trade name: "NX62-1"; Tg of the resin: 47°C; Mw of the resin: 38,000; the solvent: toluene; the viscosity at 25°C: 3,000 mPa·s; the concentration of solid components: 54.9% by mass] was used, and the amount of the curing agent "#8000" (described above) was changed to 15 parts by mass, and a pressure sensitive adhesive sheet for marking was prepared in accordance with the same procedures as those conducted in Example 1.

The results of evaluation of the properties of the pressure sensitive adhesive sheet for marking are shown in Table 1.

### Example 3

A coating fluid having a concentration of solid components of 28% by mass was prepared in accordance with the same procedures as those conducted in Example 2 except that 10 parts by mass of a matting agent [manufactured by Asia Industry Co., Ltd.; the trade name: "Matting Agent M"; particles of a polycarbonate resin having an average diameter of 3.5 µm; the medium for dispersion: xylene/cyclohexanone; the concentration of solid components: 7% by mass] was further added, and a pressure sensitive adhesive sheet for marking was prepared in accordance with the same procedures as those conducted in Example 2.

The results of evaluation of the properties of the pressure sensitive adhesive sheet for marking are shown in Table 1.

### Example 4

A coating fluid having a concentration of solid components of 26% by mass was prepared in accordance with the same procedures as those conducted in Example 3 except that the amount of "Matting Agent M" (described above) was changed to 30 parts by mass, and a pressure sensitive adhesive sheet for marking was prepared in accordance with the same procedures as those conducted in Example 3.

The results of evaluation of the properties of the pressure sensitive adhesive sheet for marking are shown in Table 1.

### Example 5

A coating fluid having a concentration of solid components of 28% by mass was prepared in accordance with the same procedures as those conducted in Example 1 except that 100 parts by mass of an acrylic polyol resin modified with a polyester [manufactured by Asia Industry Co., Ltd.; the trade name: "NX62-2"; Tg of the resin: 47°C; Mw of the resin: 18,000; the solvent: toluene; the viscosity at 25°C: 1,050 mPa·s; the concentration of solid components: 55.5% by mass] was used, the amount of the curing agent "#8000" was changed to 15 parts by mass, and 20 parts by mass of a matting agent [manufactured by Asia Industry Co., Ltd.; the trade name: "Matting Agent Y"; particles of a polyethylene wax having an average diameter of 8.3 µm; the medium for dispersion: toluene; the concentration of solid components: 10% by mass] was added, and a pressure sensitive adhesive sheet for marking was prepared in accordance with the same procedures as those conducted in Example 1.

The results of evaluation of the properties of the pressure sensitive adhesive sheet for marking are shown in Table 1.

### Comparative Example 1

A pressure sensitive adhesive sheet for marking was prepared in accordance with the same procedures as those conducted in Example 1 except that no coating layer was formed on the substrate of a non-vinyl chloride-based resin having a thickness of 100 µm "ES-9470BK" (described above). The results of evaluation of the properties of the pressure sensitive adhesive sheet for marking are shown in Table 1.

### Comparative Example 2

A coating fluid having a concentration of solid components of 27% by mass was prepared in accordance with the same procedures as those conducted in Example 2 except that no curing agent was used, and a pressure sensitive adhesive sheet for marking was prepared in accordance with the same procedures as those conducted in Example 2.

The results of evaluation of the properties of the pressure sensitive adhesive sheet for marking are shown in Table 1.

### Comparative Example 3

A coating fluid having a concentration of solid components of 28% by mass was prepared in accordance with the same procedures as those conducted in Example 1 except that 100 parts by mass of an acrylic polyol resin modified with a polyester [manufactured by Asia Industry Co., Ltd.; the trade name: "HX86-66"; Tg of the resin: 46°C; Mw of the resin: 10,000; the solvent: butyl acetate; the viscosity at 25°C: 450 mPa·s; the concentration of solid components: 47.9% by mass] was used as the acrylic polyol resin modified with a polyester, and the amount of the curing agent "#8000" was changed to 44 parts by mass, and a pressure sensitive adhesive sheet for marking was prepared in accordance with the same procedures as those conducted in Example 1.

The results of evaluation of the properties of the pressure sensitive adhesive sheet for marking are shown in Table 1.

### Comparative Example 4

A coating fluid having a concentration of solid components of 29% by mass was prepared in accordance with the same procedures as those conducted in Comparative Example 3 except that 100 parts by mass of an acrylic polyol resin modified with a polyester [manufactured by Asia Industry Co., Ltd.; the trade name: "KX43-30"; Tg of the resin: 40°C; Mw of the resin: 10,000; the solvent: IPSOL 150/PMA; the viscosity at 25°C: 780 mPa·s; the concentration of solid components: 50.5% by mass] was used as the acrylic polyol resin modified with a polyester, and a pressure sensitive adhesive sheet for marking was prepared in accordance with the same procedures as those conducted in Comparative Example 3.

The results of evaluation of the properties of the pressure sensitive adhesive sheet for marking are shown in Table 1.

**Table 1 - 1**

| Example | 1 | 2 | 3 | 4 | 5 |
|---|---|---|---|---|---|
| Composition of coating fluid | | | | | |
| acrylic polyol resin modified | EEX-19 | NX62-1 | NX62-1 | NX62-1 | NX62-1 |
| with polyester amount (part by mass) | 100 | 100 | 100 | 100 | 100 |
| curing agent | #8000 | #8000 | #8000 | #8000 | #8000 |
| amount (part by mass) | 17 | 15 | 15 | 15 | 15 |
| matting agent | - | - | M | M | Y |
| amount (part by mass) | - | - | 10 | 30 | 20 |
| ethyl acetate (part by mass) | 100 | 100 | 100 | 100 | 100 |
| ratio of amounts [NCO]/[OH] | 0.94 | 0.94 | 0.94 | 0.94 | 0.94 |

| Evaluation | | | | | |
|---|---|---|---|---|---|
| resistance to cracks under stretching | good | good | good | good | good |
| resistance to scratches in presence of chemicals | | | | | |
| IPA | good | good | good | good | fair |
| WAX | good | good | good | good | fair |
| kerosene | good | good | good | good | good |
| resistance to dipping into chemicals | good | good | good | good | good |
| resistance to blocking | good | good | good | good | good |
| weatherability | good | good | good | good | good |
| gloss | 79 | 76 | 51 | 24 | 30 |

**Table 1 - 2**

| Comparative Example | 1 | 2 | 3 | 4 |
|---|---|---|---|---|
| Composition of coating fluid | | | | |
| acrylic polyol resin modified | - | NX62-1 | HX86-66 | KX43-30 |
| with polyester amount (part by mass) | - | 100 | 100 | 100 |
| curing agent | - | - | #8000 | #8000 |
| amount (part by mass) | - | - | 44 | 44 |
| matting agent | - | - | - | - |
| amount (part by mass) | - | - | - | - |
| ethyl acetate (part by mass) | - | 100 | 100 | 100 |
| ratio of amounts [NCO]/[OH] | - | 0 | 1.1 | 1.6 |

| Evaluation | | | | |
|---|---|---|---|---|
| resistance to cracks under stretching | - | good | good | good |
| resistance to scratches in presence of chemicals | | | | |
| IPA | poor | fair | good | poor |
| WAX | poor | fair | good | fair |
| kerosene | fair | fair | good | fair |
| resistance to dipping into chemicals | good | poor | good | good |
| resistance to blocking | good | good | poor | fair |
| weatherability | poor | poor | good | good |
| gloss | 11 | 11 | 74 | 75 |

As shown in Table 1, the pressure sensitive adhesive sheets for marking of Example 1 to 4 all showed excellent results with respect to all of the resistance to cracks under stretching, the resistance to scratches in the presence of chemicals, the resistance to dipping into chemicals, the resistance to blocking and the weatherability. In Example 5, the resistance to cracks, the resistance to dipping into chemicals, the resistance to blocking and the weatherability were excellent although the resistance to scratches in the presence of chemicals was somewhat inferior since the particles of a polyethylene wax having an average diameter as great as 8.3 µm were used as the matting agent.

### INDUSTRIAL APPLICABILITY

The pressure sensitive adhesive sheet for marking of the present invention is a sheet using a non-vinyl chloride-based substrate which meets environmental requirements, exhibits excellent resistance to scratches, resistance to dipping into chemicals, resistance to cracks under stretching and weatherability and a desired gloss and can be advantageously used, for example, for automobiles.

## Claims

1. A pressure sensitive adhesive sheet for marking which comprises a substrate of a non-vinyl chloride-based resin, a pressure sensitive adhesive layer disposed on one face of the substrate and a crosslinked acrylic urethane-based coating layer which comprises (A) an acrylic polyol resin modified with a polyester and having a weight-average molecular weight of 15,000 to 80,000 and (B) a polyisocyanate-based compound as a curing agent and is disposed on other face of the substrate.

2. A pressure sensitive adhesive sheet for marking according to Claim 1, wherein a glass transition temperature of the acrylic polyol resin modified with a polyester of component (A) is 42 to 60°C.

3. A pressure sensitive adhesive sheet for marking according to any one of Claims 1 and 2, wherein the crosslinked acrylic urethane-based coating layer comprises inorganic particles and/or organic particles having an average diameter of 1 to 5 µm.

4. A pressure sensitive adhesive sheet for marking according to any one of Claims 1 to 3, wherein the polyisocyanate-based compound of component (B) is at least one compound selected from the group consisting of an aliphatic isocyanate, an alicyclic isocyanate, an aromatic isocyanate, an aromatic aliphatic isocyanate, a modified compound of the isocyanates which is at least one compound selected from the group consisting of an adduct, a biuret, an isocyanurate, a urethoneimine, a urethodione, a carbodiimide and an elastic modified polyisocyanate derived from the isocyanates.

5. A pressure sensitive adhesive sheet for marking according to any one of Claims 1 to 4, wherein a ratio of amounts by mole of isocyanate group in component (B) and hydroxyl group in component (A), [NCO]/[OH], is in a range of 0.5 to 1.5.

6. A pressure sensitive adhesive sheet for marking according to any one of Claims 1 to 5, wherein a thickness of the crosslinked acrylic urethane-based coating layer is 1 to 8 µm.
